# EUROPEAN PATENT SPECIFICATION

(11) **EP 3 540 533 B1**
(45) Date of publication and mention of the grant of the patent: **15.06.2022**
(21) Application number: 19151798.6
(22) Date of filing: 15.01.2019
(51) Int. Cl.: G05B 19/042, G06F 11/14, G06F 11/20, G05B 19/05

(54) **CONTROLLER AND DATA STORAGE METHOD**
STEUERGERÄT UND DATENSPEICHERUNGSVERFAHREN
CONTRÔLEUR ET PROCÉDÉ DE STOCKAGE DE DONNÉES

(30) Priority: 14.03.2018 JP 2018046420
(43) Date of publication of application: 18.09.2019
(73) Proprietor: OMRON Corporation, Shiokoji-dori, Shimogyo-Ku Kyoto-shi Kyoto 600-8530 (JP)
(72) Inventor: NAGATA, Yuta, Kyoto, 600-8530 (JP); KAWAGUCHI, Shinichiro, Kyoto, 600-8530 (JP)
(74) Representative: Emde, Eric

(56) References cited:
- EP-A1- 3 229 137

## Description

### BACKGROUND

### [Technical field]

The disclosure relates to a controller and a data storage method for mirroring data of process management, etc.

### [Description of Related Art]

In a process control system, from the perspective of robustness, it is known to separately capture process management data relating to the state of the control object as mirroring (memorizing the same contents at two locations at the same time) data. For example, Patent Document 1 (Japanese Laid-Open No. 2016-27565) describes a process control system where, in a mode in which a plurality of I/O (Input/Output) modules 204 that acquire data from various sensors on the side of the control object are used, a plurality of control modules 206 for monitoring and controlling these I/O modules 204 are provided for redundancy, and such control modules 206 perform mirroring of an information database relating to the I/O modules 204. In another example, Patent Document 2 (EP application No. 3 229 137 A1) describes a general-purpose operating system (OS) and a real-time operating system (OS) executed in parallel. The real-time OS has a function of executing a shutdown preparation process for shutdown of the real-time OS in response to the cutoff event, a function of instructing the general-purpose OS to shut down after executing the shutdown preparation process, and a function of completing the shutdown of the real-time OS and cutting off power supply of the control device when a predetermined condition is satisfied.

In the process control system, the mirroring processing in which human machine interface (HMI) data inputted at a high frequency by a user program (control program) is captured to a buffer and captured to a magnetoresistive random access memory (MRAM) for mirroring processing is also known. With the possibility of infinite rewriting as well as high speed and non-volatility, the MRAM exhibits strong robustness against abnormalities such as power failure.

### [Related Art Document(s)]

### Patent Document(s)

[Patent Document 1] Japanese Laid-Open No. 2016-27565
[Patent Document 2] EP application No. 3 229 137 A1

Recently, an industrial personal computer (IPC) system including a programmable logic controller (PLC) system and a programmable display device as the HMI, and controlling the operation of a control object such as a machine or an apparatus is known. Since the IPC operates on a general-purpose operating system (OS) such as Windows (registered trademark) and generally does not have an MRAM, a technique which replaces MRAM is required for mirroring processing of the HMI data.

For example, although an alternative technology in which the HMI data is flushed (written) to a disk (HDD/SSD) for each input can be considered, writing at a high frequency leads to the issue of disk life, and data may be damaged if power interruption (power cutoff) occurs during writing.

Further, although an alternative technique in which the mirroring processing of the HMI data is performed by using a memory mapped file mapped to the virtual memory space can be considered, depending on the timing of flushing to the disk, the issue of data loss may arise. In order to prevent data loss, since the HMI data is flushed at a high frequency, the issue of disk life as described above also arises.

### SUMMARY

The invention is defined by the independent claims. Optional features of the invention are provided by the dependent claims. The disclosure provides a controller and a data storage method that ensure high robustness by performing mirroring processing with a dedicated operating system.

### BRIEF DESCRIPTION OF THE DRAWINGS

FIG. 1 is a block diagram showing an outline of an IPC system showing an example to which a controller according to the disclosure is applied.
FIG. 2 is a block diagram showing an embodiment of a controller according to the disclosure.
FIG. 3 is a detailed functional configuration diagram of the controller of FIG. 2.
FIG. 4 is a flowchart showing startup processing executed by an OS.
FIG. 5 is a flowchart showing processing from operation to end executed by an OS.
FIG. 6 is a flowchart showing power interruption processing, etc., executed by a real-time OS.
FIG. 7 is another block diagram of a controller.

### DESCRIPTION OF THE EMBODIMENTS

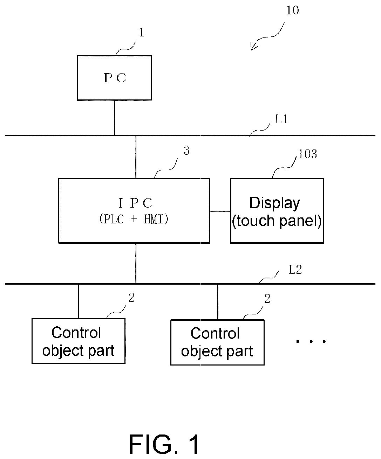

FIG. 1 is a block diagram showing an outline of an IPC system showing an example to which a controller according to the disclosure is applied. In FIG. 1, an IPC system 10 includes a personal computer (PC) 1, an industrial personal computer (IPC) 3 as a controller, and various or a required number of control object parts 2 whose operations are controlled by a control signal generated by a control program of the IPC 3. The control object part 2 is typically a machine, an apparatus, etc. The PC 1 is a personal computer for memorizing an application program serving to cause the control object parts 2 to perform desired operations and created by a system administrator, and a setting data file including various operation setting values (holding variables and the like) to the side of the IPC 3.

The PC 1 and the IPC 3 are connected by an Ethernet (registered trademark) L1, and can exchange information. In addition, the IPC 3 and the various control object parts 2 are connected by an EtherCAT (registered trademark) L2, and can exchange data. The EtherCAT (registered trademark) L2 is an open network for industrial use and is used as a field network.

The IPC 3 is connected to a display 103 composed of a touch panel. The IPC 3 has a configuration including a programmable logic controller (PLC) and an HMI part. The IPC 3 inputs operation data from the side of the display 103, inputs each data from the control object parts 2 or a sensor not shown herein, and generates and outputs a control signal (PLC data) for causing the operation of each of the control object parts 2 from these input data. In the following description, among the operation data from the side of the display 103, the various data from the control object parts 2 and the sensor (not shown), etc., and others (for example, the holding variable used when creating the control signal, the alarm data showing abnormalities and contents thereof, and the logs of various data) are included and referred to as HMI data (corresponding to first data in the disclosure).

The CPU (Central Processing Unit) (processor) in the IPC 3 operates on a general-purpose operating system (OS) such as Windows (registered trademark), which performs processing relating to acquisition and management of the HMI data, and operates on a built-in real-time OS, such as QNX, suitable for executing a series of processes on the control object parts 2 in a predetermined processing time with high responsiveness in this embodiment.

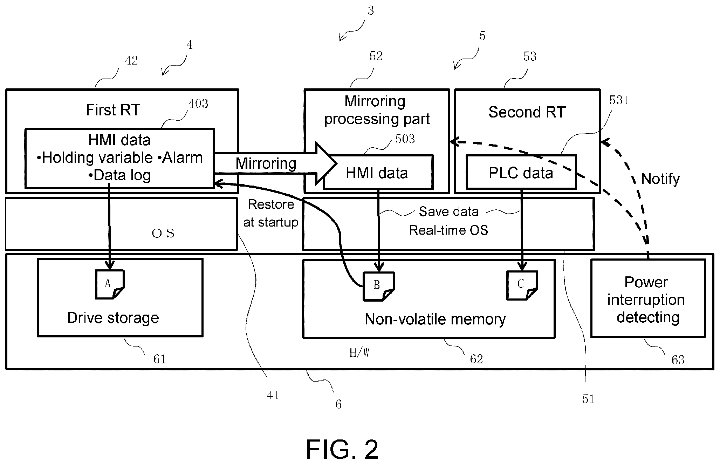

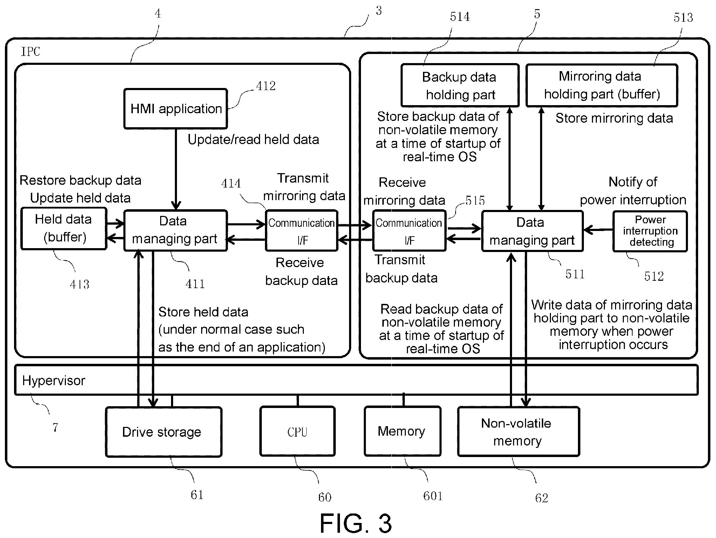

FIG. 2 is a block diagram showing an embodiment of a controller according to the disclosure. FIG. 3 is a detailed functional configuration diagram of the controller of FIG. 2. In FIGs. 2 and 3, the IPC 3 includes a software part and a hardware (H/W) part 6. The software part consists of an OS part 4 which includes a first runtime (RT) 42 as an application program operating on an OS 41 and a real-time OS part 5 which includes a mirroring processing part 52, such as a simple redundant array of inexpensive disk (RAID), etc., that executes mirroring processing to a volatile memory and is as an application program operating on a real time OS 51 and a second runtime (RT) 53 that processes PLC data 531 (second data). The hardware 6 has a CPU (processor) 60, a memory 601, a drive storage 61, and a non-volatile memory 62. The drive storage 61 refers to an HDD or SSD. Also, in replace of the nonvolatile memory 62, a realizing means with another nonvolatile memory, such as a battery-attached SRAM (static random-access memory), may also be adopted.

The OS 41 and the real-time OS 51 are executed in a virtual environment by using a hypervisor 7, etc. The real-time OS 51 is a highly reliable OS, and is capable of stably controlling the control object parts 2. Compared with the real-time OS 51, the OS 41 is less reliable, but has high versatility and can execute various general-purpose applications or user applications. Through operating at a lower level than the OS 41 and the real-time OS 51, the hypervisor 7 can control multiple OSs (the OS 41 and the real-time OS 51 in this example) by reproducing (emulating) the hardware configuration, and thereby construct multiple virtual environments on one processor.

In FIG. 2, in the mirroring processing, the first RT 42 on the OS 41 stores HMI data 403, namely the holding variable, alarm data and data logs, sequentially input along the time axis in a buffer, etc., and transmits the HMI data 403 to the side of the real time OS 51 as mirroring data. The mirroring processing part 52 stores HMI data 503 in a buffer, etc., on the real time OS 51.

The HMI data 403 is stored as a file A in the drive storage 61 of the hardware 6 at a necessary timing, such as the end of the first RT 42. Since the storing operation can be reduced with the storing processing being carried out at such an appropriate timing, the life of the disk can be extended. In addition, the HMI data 503 stored as mirroring data by the mirroring processing part 52 is stored (saved) as a file B in the non-volatile memory 62 when an abnormality occurs, for example, when the stop of power supply is detected (when power interruption is detected) in the embodiment. By storing at the timing such as occurrence of an abnormality, the load of the real-time OS 51 is reduced. Like the HMI data (first data), the PLC data (second data) created by the second RT 53 operating on the real-time OS 51 is also stored (saved) as a file C in the nonvolatile memory 62 when power interruption occurs.

Also, when the OS 41 is started, the HMI data as the file A and the HMI data as the file B are compared on time stamps indicating the storing time points, for example, and the latest HMI data is provided for restoration. As is known, the time stamps can be made available by associating time information from an internal timer (not shown) at the time point of the processing for object information.

Then, with reference to FIG. 3, the functional configurations at the side of the OS part 4 and the side of the real time OS part 5 and the flow of the HMI data will be described. The OS part 4 functions as a data managing part 411 by executing the OS 41 and the first RT 42 (such as an HMI application 412) operating on the OS 41. The OS part 4 further includes a held data buffer 413 and a communication I/F (interface) 414.

During operation, the data managing part 411 updates and stores the HMI data sequentially input from the side of the display 103 and the control object parts 2 to the held data buffer 413, and outputs the HMI data as mirroring data to the communication I/F 414. Further, the data managing part 411 stores the contents of the held data buffer 413 in the drive storage 61 at the time when the HMI application 412 ends. In addition, at the time of startup, by reading the HMI data lastly stored in the drive storage 61, reading the HMI data lastly stored in the nonvolatile memory 62 at the side of the real time OS part 5, and comparing the time stamps of the two HMI data, the data managing part 411 selects and restores the latest HMI data to the held data buffer 413.

The real-time OS part 5 functions as a data managing part 511 and a power interruption detecting part 512 by executing the real time OS 51 and the mirroring processing part 52 operating on the real time OS 51. The power interruption detecting part 512 may take various forms, and may be, for example, a general sensor configuration that detects the voltage level of a power line and compares the voltage level with a threshold value. The real-time OS part 5 further includes a mirroring data holding part 513 as a buffer, a backup data holding part 514 as a buffer, and a communication I/F 515. The communication method between the communication I/F 414 and the communication I/F 515 is not particularly specified, and may be, for example, Ethernet (registered trademark) or virtual bus (VMBus).

During operation, the data managing part 511 stores the HMI data, which is the mirroring data transmitted from the communication I/F 414 to the communication I/F 515, to the mirroring data holding part 513. Further, when power interruption is detected, the data managing part 511 writes the HMI data stored in the mirroring data holding part 513 to the nonvolatile memory 62. Various modes can be adopted as the countermeasure against power interruption. For example, a built-in rechargeable battery or a known protection circuit may be installed, so that the CPU 60 secures the processing time until the interruption. Further, the data managing part 511 writes the latest HMI data of the nonvolatile memory 62 in the backup data holding part 514 at the time of startup of the real-time OS 51. Upon receiving a transmission request from the communication I/F 414, the data managing part 511 transmits the HMI data of the backup data holding part 514 to the communication I/F 414 via the communication I/F 515.

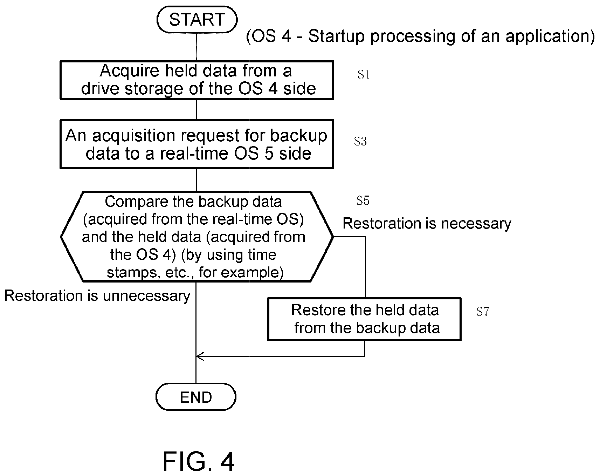

FIG. 4 is a flowchart showing startup processing executed by the data managing part 411 operating on the OS. Upon the startup of the HMI application 412, the held data stored in the drive storage 61 of the OS part 4 is read and acquired (Step S1). Next, the acquisition request for the backup data stored in the backup data holding part 514 is transmitted to the real time OS part 5 (Step S3). The data managing part 411 determines whether to restore the backup data to the held data buffer 413 from the time stamps of the backup data that is transmitted and acquired from the side of the real time OS part 5 in response to the acquisition request and the held data that is stored in the drive storage 61 (Step S5). That is, in the case where the held data stored in the drive storage 61 is temporally more recent than the backup data acquired from the side of the real time OS part 5, it is not necessary to perform the restoring processing of the held data. In this case, the mode in which the drive storage 61 is written may be adopted.

On the other hand, in the case where the backup data acquired from the side of the real-time OS part 5 is temporally more recent than the held data stored in the drive storage 61, the restoration for the held data is necessary; in other words, the backup data acquired from the side of the real-time OS part 5 is restored to the held data buffer 413 (Step S7). As a result, the most recent backup data is restored to the held data buffer 413 in response to the startup of the HMI application.

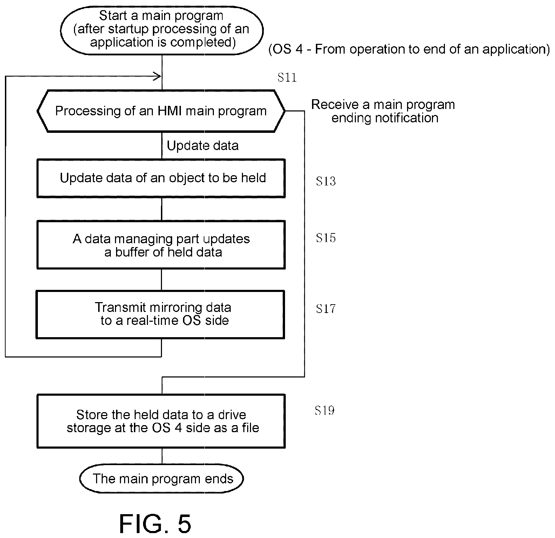

FIG. 5 is a flowchart showing processing from operation to end executed by the data managing part 411 operating on the OS. The HMI application 412 after startup determines, during operation, whether processing of an HMI main program is a data update of newly input HMI data or reception of a main program ending notification (Step S11).

In the case where the processing of the HMI main program is determined to be the data update of the newly input HMI data, the HMI data is set as data of an object to be held, and update processing is instructed. (Step S13). That is, the data managing part 411 updates and memorizes the held data of the object to be held in the held data buffer 413 (Step S15). Next, the data managing part 411 transmits the held data of the object to be held as the mirroring data to the side of the real-time OS part 5 (Step S17).

On the other hand, in Step S11, in the case where the processing of the HMI main program is determined to be the reception of the main program ending notification, the held data held in the held data buffer 413 is stored as a file in the drive storage 61 (Step S19). At this time, storing processing may be performed in association with the time stamp.

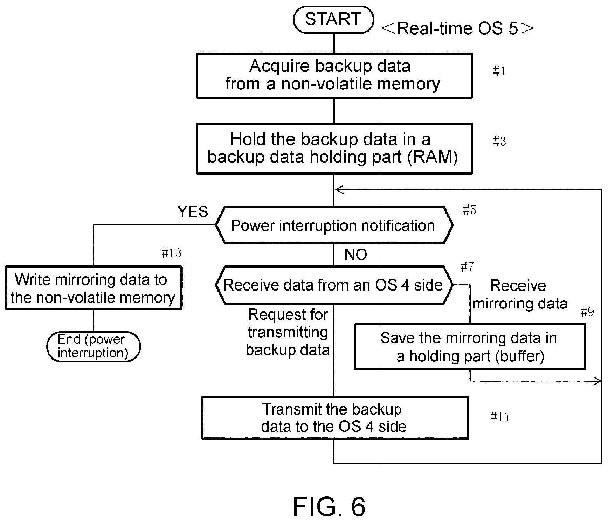

FIG. 6 is a flowchart showing power interruption processing, etc., executed by the data managing part 511 operating on the real-time OS. First, at the time of startup, the backup data is acquired from the nonvolatile memory 62 (Step #1). The acquired backup data is held in the backup data holding part 514 (Step #3). Through this processing, the backup data acquisition request from the OS part 4 can be responded immediately after startup.

Next, whether there is a power interruption notification is determined (Step #5). In the case where there is no power interruption notification, subsequently, whether data is received from the side of the OS part 4 is determined (Step #7). In the case where the data received from the side of the OS part 4 is the mirroring data, the data managing part 511 stores the received mirroring data in the mirroring data holding part 513 (Step #9) and the flow returns to Step #5. On the other hand, in the case where the data received from the side of the OS part 4 is the backup data acquisition request, the data managing part 511 transmits the backup data to the side of the OS part 4 (Step #11) and the flow returns to the Step #5.

Alternatively, in the case where there is a power interruption notification in Step #5, the data managing part 511 writes the mirroring data stored in the mirroring data holding part 513 to the nonvolatile memory 62 (Step #13). As a result, upon the startup after the power interruption, the mirroring data with the time stamp at the time of the power interruption is read from the nonvolatile memory 62 and stored in the backup data holding part 514 (Steps # 1 and # 3).

Considering the case where the power interruption occurs during writing of the mirroring data to the mirroring data holding part 513, for example, two mirroring data holding parts 513 may be provided alternately or redundantly (double writing) so as to ensure the integrity of the mirroring data.

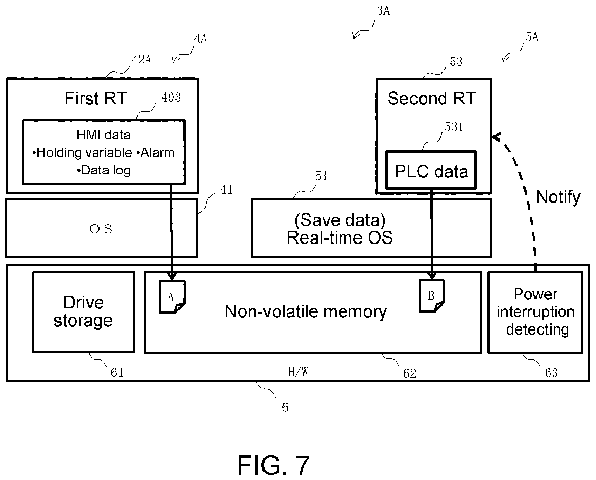

FIG. 7 is another block diagram of the controller. An IPC 3A shown in FIG. 7 is different from the IPC 3 of FIG. 2 in that the IPC 3A does not include the mirroring processing part 52 and that the mirroring processing is directly written from the second RT application 53 into the nonvolatile memory 62. The IPC 3A buffers the HMI data sequentially input along the time axis by a first RT 42A operating on the OS 41 and directly writes the HMI data to the nonvolatile memory 62 as the mirroring data via the OS 41. The buffered HMI data is stored in the drive storage 61 at a predetermined timing, such as the time point at which the first RT 42A ends. In this way, the life of the drive storage 61 is prolonged, the data loss is reduced as compared to the case of writing at a high frequency for each input of the HMI data, and the load at the side of a real-time OS part 5A side is alleviated.

In this embodiment, although the held data buffer 413 and the mirroring data holding part (buffer) 513 are described for storing the HMI data and the mirroring data, the held data buffer 413 and the mirroring data holding part (buffer) 513 are not limited to volatile memories, but may be nonvolatile memories. In this embodiment, the CPU 60 is described as a single processor, but a mode in which a multiprocessor controls the respective OSs may also be adopted.

### [Description of Reference Numerals]

3: IPC (controller)
41: OS (first operating system)
411: data managing part (first data managing part)
42: first RT (application program)
412: HMI application (application program)
413: held data buffer (first memory)
51: real time OS (second operating system)
511: data managing part (second data managing part)
512: power interruption detecting part
513: mirroring data holding part (second memory)
514: backup data holding part (backup memory)
52: mirroring processing part (application program)
60: CPU (control part)
61: drive storage (first nonvolatile memory)
62: nonvolatile memory (second nonvolatile memory)

## Claims

1. A controller (3), comprising a control part (60) operating on a general-purpose operating system (41) and a real-time operating system (51) for controlling a control object, the controller (3) comprising:
a first data managing part (411), configured to perform acquisition processing of periodically input first data by an application program (42, 412) operating on the general-purpose operating system (41);
a first buffer memory (413) in which the first data is memorized by the first data managing part (411);
a second data managing part (511), configured to exchange data with the first data managing part (411) by an application program (52) operating on the real-time operating system (51) for controlling the control object;
a second buffer memory (513) in which data is memorized by the second data managing part (511),
a power interruption detecting part (512) configured to detect power interruption of the control part (60); and
a second nonvolatile memory (62), **characterized in that**
the first data managing part (411), configured to transmit the acquired first data to the second data managing part (511) as mirroring data, and
the second data managing part (511), configured to memorize the mirroring data in the second buffer memory (513), wherein the mirroring data of the second buffer memory (513) are stored in the second nonvolatile memory (62) upon a detection of power interruption.

2. The controller (3) according to claim 1, comprising:
a first nonvolatile memory (61) in which contents of the first buffer memory (413) are stored by the first data managing part (411) at a time when the application program (42, 412) of the general-purpose operating system (41) ends.

3. The controller (3) according to claim 2,
wherein the second data managing part (511) is configured to transmit contents of the second nonvolatile memory (62) to the first data managing part (411) in response to a request from the first data managing part (411), and
the first data managing part (411) is configured to, at a time of startup of the control part (60), read the contents of the first nonvolatile memory (61), compare the contents of the first nonvolatile memory (61) with the contents of the second nonvolatile memory (62) that are received, and restore latest contents to the first buffer memory (413).

4. The controller (3) according to claim 3, comprising:
a backup memory (514) in which data is memorized by the second data managing part (511),
wherein the second data managing part (511) is configured to, at a time of startup of the real-time operating system (51), read the contents of the second nonvolatile memory (62) to the backup memory (514), and transmit contents of the backup memory (514) to the first data managing part (411) in response to a request from the first data managing part (411).

5. The controller (3) according to any one of claims 1 to 4, wherein
the real-time operating system (51) is more reliable than general-purpose operating system (41), and
the real-time operating system (51) is less versatile than the general-purpose operating system (41).

6. A data storage method, in which a controller according to claim 1 performs following:
an acquisition step of acquiring periodically input first data by an application program (42, 412) operating on the general-purpose operating system (41);
a first buffer memory step of memorizing the first data acquired in the acquisition step in a first buffer memory (413);
a transmission step of transmitting the first data acquired in the acquisition step to the side of the real-time operating system (51) as mirroring data;
a step of detecting power interruption of the control part (60), and **characterized by**
a second buffer memory step of memorizing the mirroring data in a second buffer memory (513) by an application program (52) operating on the real-time operating system (51), wherein the mirroring data of the second buffer memory (513) are stored in the second nonvolatile memory (62) upon a detection of power interruption.

## Patentansprüche

1. Steuerung (3), umfassend ein Steuerteil (60), das auf einem Allgemeinzweck-Betriebssystem (41) und einem Echtzeit-Betriebssystem (51) zur Steuerung eines Steuerobjekts arbeitet, wobei die Steuerung (3) umfasst:
ein erstes Datenverwaltungsteil (411), das konfiguriert ist, um Erfassungsverarbeitung von periodischer Eingabe erster Daten durch ein Anwendungsprogramm (42, 412) durchzuführen, das auf dem Allgemeinzweck-Betriebssystem (41) arbeitet;
einen ersten Pufferspeicher (413), in dem die ersten Daten von dem ersten Datenverwaltungsteil (411) gespeichert werden;
ein zweites Datenverwaltungsteil (511), das konfiguriert ist, Daten mit dem ersten Datenverwaltungsteil (411) durch ein Anwendungsprogramm (52) auszutauschen, das auf dem Echtzeit-Betriebssystem (51) arbeitet, um das Steuerobjekt zu steuern;
einen zweiten Pufferspeicher (513), in dem Daten von dem zweiten Datenverwaltungsteil (511) gespeichert werden,
ein Stromunterbrechungs-Erfassungsteil (512), das konfiguriert ist, Stromunterbrechung des Steuerteils (60) zu erfassen; und
einen zweiten nichtflüchtigen Speicher (62), **dadurch gekennzeichnet, dass**
das erste Datenverwaltungsteil (411) konfiguriert ist, die erhaltenen ersten Daten an das zweite Datenverwaltungsteil (511) als Spiegelungsdaten zu übertragen, und
das zweite Datenverwaltungsteil (511) konfiguriert ist, die Spiegelungsdaten in dem zweiten Pufferspeicher (513) zu speichern, wobei die Spiegelungsdaten des zweiten Pufferspeichers (513) nach einer Erfassung von Stromunterbrechung in dem zweiten nichtflüchtigen Speicher (62) gespeichert sind.

2. Steuerung (3) nach Anspruch 1, umfassend:
einen ersten nichtflüchtigen Speicher (61), in dem Inhalte des ersten Pufferspeichers (413) durch den ersten Datenverwaltungsteil (411) zu einem Zeitpunkt gespeichert werden, wenn das Anwendungsprogramm (42, 412) des Allgemeinzweck-Betriebssystems (41) endet.

3. Steuerung (3) nach Anspruch 2, umfassend:
wobei das zweite Datenverwaltungsteil (511) konfiguriert ist, um Inhalte des zweiten nichtflüchtigen Speichers (62) an das erste Datenverwaltungsteil (411) als Antwort auf eine Anfrage von dem ersten Datenverwaltungsteil (411) zu übertragen, und
das erste Datenverwaltungsteil (411) konfiguriert ist, um zu einem Zeitpunkt von Inbetriebnahme des Steuerteils (60) die Inhalte des ersten nichtflüchtigen Speichers (61) zu lesen, die Inhalte des ersten nichtflüchtigen Speichers (61) mit den Inhalten des zweiten nichtflüchtigen Speichers (62), die empfangen werden, zu vergleichen, und letzte Inhalte zu dem ersten Pufferspeicher (413) wiederherzustellen.

4. Steuerung (3) nach Anspruch 3, umfassend:
einen Backup-Speicher (514), in dem Daten durch das zweite Verwaltungsteil (511) gespeichert sind,
wobei das zweite Datenverwaltungsteil (511) konfiguriert ist, um zu einem Zeitpunkt der Inbetriebnahme des Echtzeit-Betriebssystems (51) die Inhalte des zweiten nichtflüchtigen Speichers (62) in den Backup-Speicher (514) zu lesen, und Inhalte des Backup-Speichers (514) an den ersten Datenverwaltungsteil (411) als Antwort auf eine Anfrage von dem ersten Datenverwaltungsteil (411) zu übertragen.

5. Steuerung (3) nach einem der Ansprüche 1 bis 4, wobei
das Echtzeit-Betriebssystem (51) verlässlicher als Allgemeinzweck-Betriebssystem (41) ist, und
das Echtzeit-Betriebssystem (51) weniger vielseitig als das Allgemeinzweck-Betriebssystem (41) ist.

6. Datenspeicherverfahren, in dem eine Steuerung gemäß Anspruch 1 Folgendes ausführt:
einen Erfassungsschritt zum Erfassen von periodischer Eingabe erster Daten durch ein Anwendungsprogramm (42, 412), das auf dem Allgemeinzweck-Betriebssystem (41) arbeitet;
einen ersten Pufferspeicherschritt zum Speichern der ersten in dem Erfassungsschritt erfassten Daten in einem ersten Pufferspeicher (413);
einen Übertragungsschritt zum Übertragen der ersten in dem Erfassungsschritt erfassten Daten zu der Seite des Echtzeit-Betriebssystems (51) als Spiegelungsdaten;
einen Schritt zum Erfassen von Stromunterbrechung des Steuerteils (60) und **gekennzeichnet durch**
einen zweiten Pufferspeicherschritt zum Speichern der Spiegelungsdaten in einem zweiten Pufferspeicher (513) durch ein Anwendungsprogramm (52), das auf dem Echtzeit-Betriebssystem (51) arbeitet, wobei die Spiegelungsdaten des zweiten Pufferspeichers (513) nach einer Erfassung von Stromunterbrechung in dem zweiten nichtflüchtigen Speicher (62) gespeichert sind.

## Revendications

1. Dispositif de commande (3), comprenant une partie de commande (60) fonctionnant sur un système d'exploitation universel (41) et un système d'exploitation en temps réel (51) pour commander un objet de commande, le dispositif de commande (3) comprenant :
une première partie de gestion de données (411), configurée pour réaliser un traitement d'acquisition de premières données entrées périodiquement par un programme d'application (42, 412) fonctionnant sur le système d'exploitation universel (41) ;
une première mémoire tampon (413) dans laquelle les premières données sont mémorisées par la première partie de gestion de données (411) ;
une deuxième partie de gestion de données (511) configurée pour échanger des données avec la première partie de gestion de données (411) par un programme d'application (52) fonctionnant sur le système d'exploitation en temps réel (51) pour commander l'objet de commande ;
une deuxième mémoire tampon (513) dans laquelle des données sont mémorisées par la deuxième partie de gestion de données (511) ;
une partie de détection de coupure de courant (512) configurée pour détecter une coupure de courant de la partie de commande (60) ; et
une deuxième mémoire non volatile (62), **caractérisé en ce que**
la première partie de gestion de données (411) est configurée pour transmettre les premières données acquises à la deuxième partie de gestion de données (511) en tant que données de miroir, et
la deuxième partie de gestion de données (511) est configurée pour mémoriser les données de miroir dans la deuxième mémoire tampon (513), dans lequel les données de miroir de la deuxième mémoire tampon (513) sont stockées dans la deuxième mémoire non volatile (62) lors d'une détection d'une coupure de courant.

2. Dispositif de commande (3) selon la revendication 1, comprenant :
une première mémoire non volatile (61) dans laquelle un contenu de la première mémoire tampon (413) est stocké par la première partie de gestion de données (411) à un temps auquel le programme d'application (42, 412) du système d'exploitation universel (41) se termine.

3. Dispositif de commande (3) selon la revendication 2, dans lequel la deuxième partie de gestion de données (511) est configurée pour transmettre un contenu de la deuxième mémoire non volatile (62) à la première partie de gestion de données (411) en réponse à une demande depuis la première partie de gestion de données (411), et
la première partie de gestion de données (411) est configurée pour, à un temps de démarrage de la partie de commande (60), lire le contenu de la première mémoire non volatile (61), comparer le contenu de la première mémoire non volatile (61) au contenu de la deuxième mémoire non volatile (62) qui est reçu, et restaurer le contenu le plus récent dans la première mémoire tampon (413) .

4. Dispositif de commande (3) selon la revendication 3, comprenant :
une mémoire de sauvegarde (514) dans laquelle des données sont mémorisées par la deuxième partie de gestion de données (511),
dans lequel la deuxième partie de gestion de données (511) est configurée pour, à un temps de démarrage du système d'exploitation en temps réel (51), lire le contenu de la deuxième mémoire non volatile (62) dans la mémoire de sauvegarde (514), et transmettre un contenu de la mémoire de sauvegarde (514) à la première partie de gestion de données (411) en réponse à une demande depuis la première partie de gestion de données (411) .

5. Dispositif de commande (3) selon l'une quelconque des revendications 1 à 4, dans lequel
le système d'exploitation en temps réel (51) est plus fiable que le système d'exploitation universel (41), et le système d'exploitation en temps réel (51) est moins polyvalent que le système d'exploitation universel (41) .

6. Procédé de stockage de données, dans lequel un dispositif de commande selon la revendication 1 réalise ce qui suit :
une étape d'acquisition consistant à acquérir périodiquement des premières données entrées par un programme d'application (42, 412) fonctionnant sur le système d'exploitation universel (41) ;
une première étape de mémoire tampon consistant à mémoriser les premières données acquises à l'étape d'acquisition dans une première mémoire tampon (413) ;
une étape de transmission consistant à transmettre les premières données acquises à l'étape d'acquisition au côté du système d'exploitation en temps réel (51) en tant que données de miroir ;
une étape de détection de coupure de courant de la partie de commande (60), et
**caractérisé par**
une deuxième étape de mémoire tampon consistant à mémoriser les données de miroir dans une deuxième mémoire tampon (513) par un programme d'application (52) fonctionnant sur le système d'exploitation en temps réel (51), dans lequel les données de miroir de la deuxième mémoire tampon (513) sont stockées dans la deuxième mémoire non volatile (62) lors d'une détection d'une coupure de courant.
